# EUROPÄISCHE PATENTSCHRIFT

(11) **EP 2 135 510 B1**
(45) Veröffentlichungstag und Bekanntmachung des Hinweises auf die Patenterteilung: **22.02.2012**
(21) Anmeldenummer: 09450118.6
(22) Anmeldetag: 15.06.2009
(51) Int. Cl.: A23B 4/28, A22C 9/00

(54) **Verfahren und Vorrichtung zur Einbringen von Lake in stückige Lebensmittelprodukte**
Method and device for introducing brine in particulate food products
Procédé et dispositif pour l'introduction de la saumure dans un produit alimentaire particulier

(30) Priorität: 19.06.2008 AT 9892008
(43) Veröffentlichungstag der Anmeldung: 23.12.2009
(73) Patentinhaber: Inject Star Pökelmaschinen Gesellschaft m.b.H, 2201 Hagenbrunn (AT)
(72) Erfinder: Kejik, Reinhold, 2201 Gerasdorf (AT)
(74) Vertreter: Wildhack & Jellinek

(56) Entgegenhaltungen:
- EP-A- 0 191 712
- EP-A- 0 297 592
- EP-A- 0 845 215
- EP-A- 1 230 859
- DE-A1- 3 019 587
- DE-A1- 10 124 346
- JP-A- 11 046 724
- US-A- 3 656 424
- US-A- 4 220 669
- US-A- 4 254 151
- US-A- 4 622 892

## Beschreibung

Die Erfindung betrifft ein Verfahren gemäß dem Oberbegriff des Patentanspruches 1. Des weiteren betrifft die Erfindung eine Vorrichtung gemäß dem Oberbegriff des Patentanspruches 6.

Aus der US-PS 4220669 A ist eine Dosiereinrichtung für die Einbringung von Lake in Fleischprodukte bekannt, bei der die Eindringgeschwindigkeit der Nadeln in Abhängigkeit von der Konsistenz des Fleischproduktes geregelt wird. Eine Kolbenpumpe versorgt eine Vielzahl von Nadeln.

Aus der DE 3019587 A1 und der US 4254151 ist eine Vorrichtung zum Einspritzen einer Flüssigkeit in Fleischstücke mit einer Nadelanordnung bekannt, bei der die von den Nadeln abzugebende Lakemenge derart gesteuert wird, dass ausgestoßene Flüssigkeitsvolumen in etwa gleich dem Volumen der Hohlräume ist, die durch die Nadeln im Fleisch gebildet werden. Bei dieser Einrichtung werden sämtliche vorhandene Nadeln durch eine einzige Kolbenpumpe gespeist.

Die US 4622892 A betrifft eine Einrichtung zur Eindosierung von Lake, bei der die vorhandenen Nadeln gemeinschaftlich mit konstantem Druck beaufschlagt werden.

Aus der EP 0845215 A ist eine Vorrichtung zum Injizieren einer Flüssigkeit in Nahrungsmittel bekannt, bei der die Geschwindigkeit des Motors des Nadelbalkes so geregelt wird, dass die Geschwindigkeit der Nadeln außer in der Nähe der Todpunkte praktisch immer gleich ist. Die gleichmäßige Nadelgeschwindigkeit soll bei konstantem Pumpendruck zu gleichmäßig verteilten Einspritzmengen führen.

Ziel der Erfindung ist es, möglichst rasch und gleichmäßig Lake in stückige Lebensmittelprodukte einzudosieren bzw. eine Vorrichtung zu erstellen, mit der eine gesteuerte und gleichmäßige Eindosierung von Lake in derartige Produkte erfolgen kann. Unregelmäßigkeiten bei der Eindosierung der Lake bewirken geschmackliche Nachteile bzw. beeinträchtigt eine Überdosierung die Struktur des Produktes. Derartige Lebensmittelprodukte sind insbesondere Fleisch und Fisch.

Erfindungsgemäß ist ein Verfahren der eingangs genannten Art mit den im Kennzeichen des Anspruches 1 angeführten Merkmalen charakterisiert. Eine Vorrichtung der eingangs genannten Art ist mit den im Kennzeichen des Anspruches 6 angeführten Merkmalen charakterisiert.

Mit der erfindungsgemäßen Vorgangsweise ist es möglich, Lake gleichmäßig in die Produkte, insbesondere Fleischmasse, einzudosieren, derart, dass pro Volumeneinheit der zu bearbeitenden Produkte gleiche Lakemengen eingespritzt werden. Dieses Einspritzen erfolgt in der Regel während des Eindringens der Nadeln, mit denen die Lake abgegeben wird. Es ist jedoch auch möglich, während des Ausziehens, d.h. während des Austrittsweges der Nadeln aus dem Produkt, einen entsprechenden Dosiervorgang vorzunehmen. Am raschesten erfolgt das Eindosieren, wenn sowohl während des Eindringens der Nadeln als auch während des Ausziehens der Nadeln Lake in das Produkt eindosiert wird. Im folgenden wird unter einem Einspritzhub das Eindosieren von Lake während des Eindringens und/oder des Herausziehens der Nadeln in das bzw. aus dem Produkt verstanden.

Es wird in vorteilhafterweise eine vorportionierte Menge von Lake mit konstanter Menge pro Zeiteinheit abgegeben und die Bewegungsgeschwindigkeit der Nadeln wird auf einem vorgegebenen, während des Einspritzhubes konstant bleibenden Wert eingeregelt. Über die Zeitdauer der einzelnen Einspritzhübe wird die Lake von den einzelnen Nadeln in gleichbleibender Menge je Zeiteinheit abgegeben und der Nadelhalter wird mit einer einstellbaren vorgegebenen Geschwindigkeit bewegt. Die pro Einspritzhub abzugebende Lakemenge kann ebenfalls eingestellt werden. Nach Art des zu behandelnden Produktes sowie nach Art und Menge der einzubringenden Lake wird die Geschwindigkeit der Nadeln vorgegeben. Es kann auch vorgesehen sein, dass unterschiedliche Geschwindigkeitswerte über Abschnitte des Einspritzhubes vorgegeben werden, die jedoch innerhalb des Abschnittes konstant bleiben, insbesondere wenn Produkte, insbesondere Fleischmassen, behandelt werden sollen, die über die Eindringstrecke der Nadeln unterschiedlichen Aufbau besitzen, wie es z.B. bei mit Fett durchzogenen Fleischsorten der Fall sein kann.

Die Eindringgeschwindigkeit wird beim erfindungsgemäßen Eindosieren konstant gehalten und die Nadeln werden vorteilhafterweise bereits mit entsprechender Geschwindigkeit den Fleischstücken angenähert und mit dieser Geschwindigkeit in die Fleischstücke eingestochen und bewegen sich durch diese mit der vorgegebenen gleichbleibenden Geschwindigkeit bis zum Abbremsen im Umkehrpunkt. Beim Abbremsen und beim Herausziehen der Nadeln ist ebenfalls ein gewisser kurzer Weg für die Beschleunigung der Nadel auf ihre Auszugsgeschwindigkeit erforderlich, über welchen Weg die Lake allenfalls nicht gleichmäßig in die Fleischstücke eindosiert wird. Diese kurzen Wege nahe dem Umkehrpunkt sind jedoch in Hinblick auf den Gesamtweg, der von den Nadeln bzw. der Nadelspitze innerhalb der Fleischstücke zurückgelegt wird, vernachlässigbar klein. Durch die eingesetzten Spindeltriebe wird den Nadeln die vorgegebene Geschwindigkeit innerhalb kürzester Zeit erteilt, sodass der Weg, der für die Beschleunigung der Nadeln erforderlich ist, vernachlässigbar kurz ist.

Die übliche Höhe der Fleischmasse liegt zwischen 180 und 280 mm. Ein Spindeltrieb oder ein hydraulischer Antrieb benötigt einen Hub von etwa 2 bis 4 mm, um die vorgegebene Geschwindigkeit der Nadeln zu erreichen. Dies bedeutet, dass lediglich ein Weg von grob gerechnet maximal 2 % des Gesamtweges für die Beschleunigung der Nadeln erforderlich ist. Dieser Wert liegt unterhalb jeglicher Toleranzgrenzen.

Allerdings ist es bei Dosieranlagen, insbesondere solchen mit Kammvorschub, üblich, dass die Nadeln die Fleischmasse völlig durchdringen und ihr Ende in ein Gitter bzw. einen Rost eindringt, d.h., dass ein Abbremsen der Nadeln erst nach vollständigem Durchdringen der Fleischmasse erfolgt. Damit ist die Geschwindigkeit in der Fleischmasse völlig konstant.

Bei der erfindungsgemäßen Vorgangsweise kann vorteilhafterweise die eingebrachte Lakemenge mit der Zeitdauer des Eindringens oder des Herausziehens der Nadeln in die oder aus dem Produkt bestimmt werden.

Eine effiziente produktgerechte Dosierung mit Lake wird mit den Merkmalen des Anspruchs 2 erreicht.

Um die Lake sparsam eindosieren zu können bzw. möglichst wenig überlaufende Lake rezyklieren zu müssen, sind die Merkmale des Anspruches 3 von Vorteil. Aus der Praxis zeigte es sich, dass es zweckmäßig ist, das Eindringen der Nadeln anzuhalten, wenn diese auf einen festen Widerstand, z.B. einen Knochen, treffen.

Wenn die Menge der zu dosierenden Lake von der Höhe der zu behandelnden Fleischmasse abhängig gemacht wird und um für die Lakeabgabe einen definierten Eindringhub und einen definierten Hub für das Herausziehen zu erreichen, sind die Merkmale des Anspruches 4 von Vorteil. Dies hat sich auch für die Praxis und eine exakte Dosierung als vorteilhaft erwiesen.

Ein einfacher Aufbau bei gleichzeitig exakter Dosierleistung der erfindungsgemäßen Vorrichtung ergibt sich, wenn jede einzelne Nadel mit einer von der Steuereinheit betätigbaren Kolbenpumpe mit Lake versorgt ist und/oder dass jede an die Dosiereinheit angeschlossene Kolbenpumpe von der Dosiereinheit nach jedem Einspritzhub oder nach einer vorgegebenen Anzahl von Einspritzhüben mit einer vorgegebenen, für eine vorgegebene Anzahl von aufeinanderfolgenden Einspritzhüben gleichbleibenden, Lakemenge befüllt wird.

Ein exakter Beginn des Eindosierungsvorganges wird mit dem Merkmal des Anspruches 7 erreicht, wobei auch ein unerwünschtes Austreten von Lake bzw. allenfalls eine Beschädigung der Nadeln und der Nadeleinheit vermieden werden kann.

Für den Betrieb der erfindungsgemäßen Vorrichtung bzw. für eine exakte Dosierung und Nadelbewegung sind die Merkmale des Anspruches 8 vorteilhaft.

Die Steuereinheit setzt die einzelnen von einem Nadelhalter getragenen Nadeln in Bewegung; vorzugsweise werden alle Nadeln gleichzeitig angetrieben bzw. bewegt.

Es ist möglich, dass eine vorgegebene Anzahl von, gegebenenfalls alle, Nadeln in Form einer Mehrfachnadel ausgebildet ist, welche Mehrfachnadel eine Anzahl von nebeneinander angeordneten Nadeln, insbesondere zwei, drei oder vier Nadeln, umfasst, die an dieselbe Dosiereinheit, insbesondere Kolbenpumpe, angeschlossen sind, wobei dieser Mehrfachnadel für einen Einspritzhub dieselbe Lakenmenge wie einer Einfach-Nadel zur Abgabe zugeführt wird. Die Nadeln einer Mehrfachnadel werden wie einzelne Nadeln bzw. Einfach-Nadeln gemeinsam während der entsprechenden Hübe bewegt und von der Dosiereinheit mit Lake gemeinsam versorgt. Jede einzelne Nadel und jede Mehrfachnadel wird von einer eigenen Kolbenpumpe mit Lake versorgt. Die Menge Lake, die von einer einzelnen Nadel einerseits bzw. von allen Nadeln einer Mehrfachnadel gemeinsam anderseits während eines Einspritzhubes abgegeben werden, ist gleich groß bemessen.

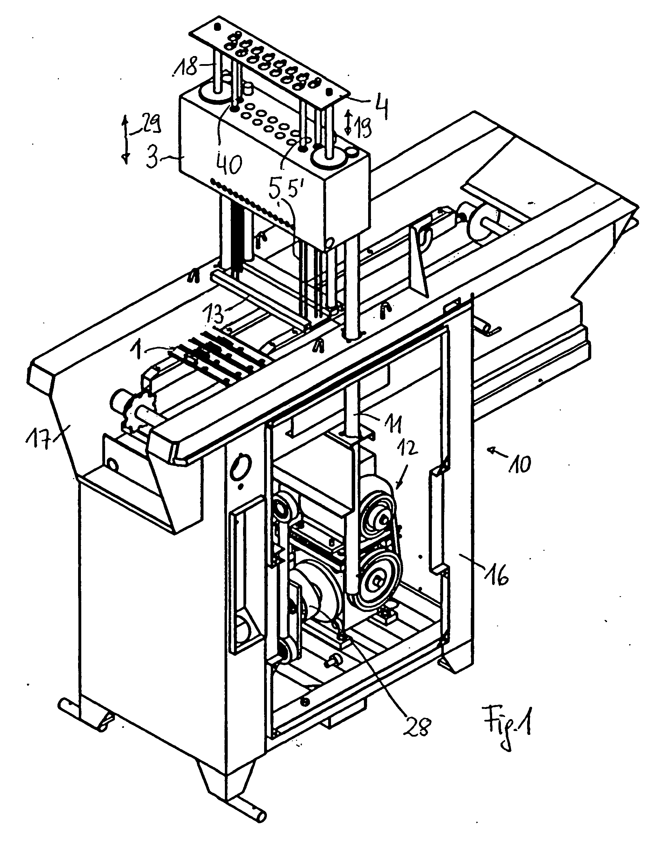

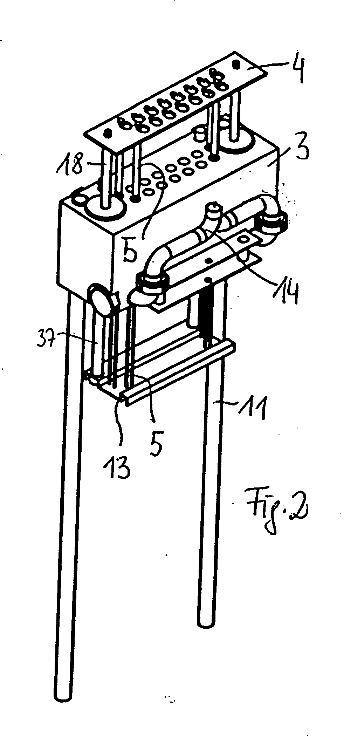

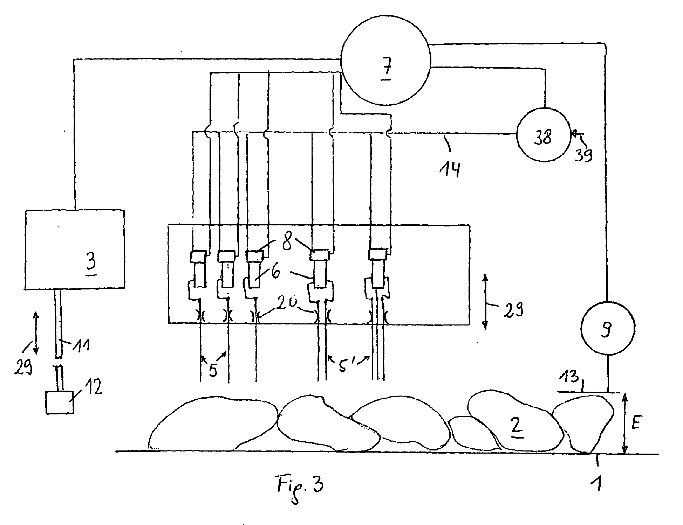

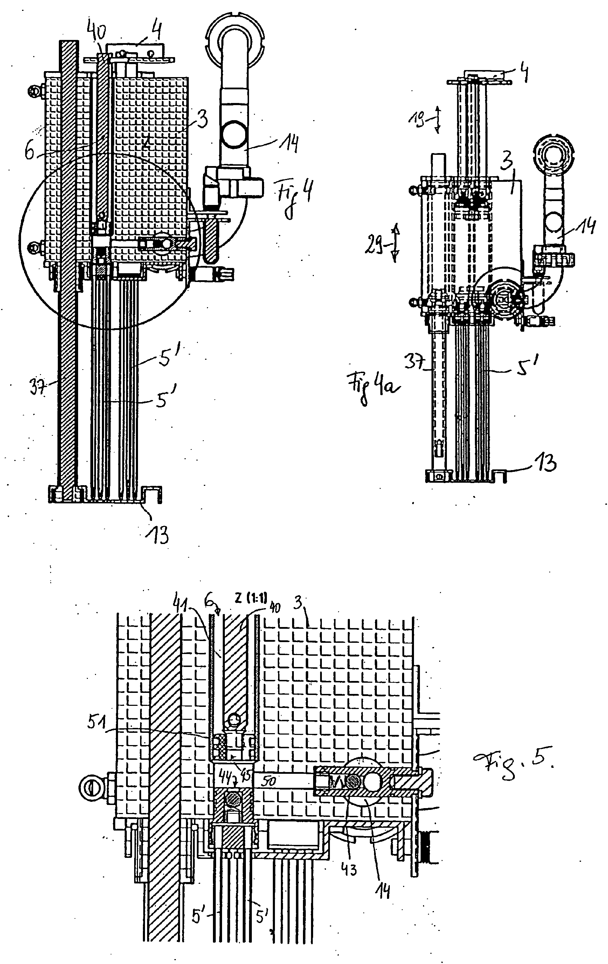

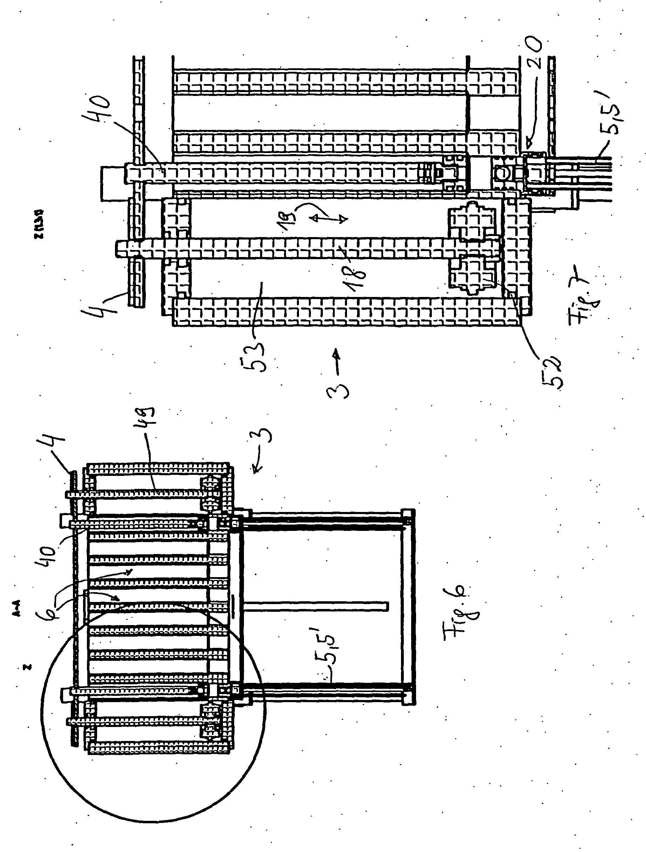

Im folgenden wird die Erfindung anhand eines in der Zeichnung dargestellten Ausführungsbeispiels näher erläutert. Fig. 1 zeigt eine schematische Ansicht einer erfindungsgemäßen Vorrichtung. Fig. 2 zeigt ein Detail dieser Vorrichtung. Fig. 3 zeigt den schematischen Aufbau der erfindungsgemäßen Vorrichtung. Fig. 4 zeigt eine Nadel mit Kolben. Fig. 4a zeigt eine Ansicht einer Sticheinheit 3 entsprechend Fig. 4 in verkleinertem Maßstab. Fig. 5 zeigt ein Detail von Fig. 4. Fig. 6 und 7 zeigen Ansichten der Sticheinheit 3.

In Fig. 1 ist ein Ausführungsbeispiel einer erfindungsgemäßen Vorrichtung 10 zur Einbringung von Lake in Lebensmittelprodukte 2, insbesondere in Fleischstücke einer Fleischmasse, dargestellt. Im folgenden wird auf das Einbringen von Lake in Fleischstücke Bezug genommen, obwohl beliebige Lebensmittelprodukte auf die erfindungsgemäße Weise mit Lake oder anderen flüssigen Medien dotiert werden können.

Eine Kolbenplatte 4, die eine Anzahl von Portionierkolben 40 trägt, ist auf Kolbenstangen 18 gelagert und führt eine Hubbewegung bzw. Auf- und Abwärtsbewegungen gemäß Richtungspfeil 19 aus. Im Zuge dieser Einspritzhübe drücken die Kolben 40 die Lake zu den Nadeln 5 bzw. 5' und spritzen diese in die unterhalb des Antriebskastens bzw. Nadelhalters 3 mittels einer Transporteinrichtung bzw. eines Förderbandes 1 vorbeibewegte Fleischmasse 2 ein.

Die Nadeln 5 sind, wie aus Fig. 2 hervorgeht, über eine Anschlussleitung 14 mit einer Lakezufuhreinheit 38 verbunden und die über diese Anschlussleitung 14 von der Lakezufuhreinheit 38 herangeführte Lake wird geregelt von einer Dosiereinheit 8 während der Einspitzhübe genau portioniert von den einzelnen Nadeln 5 bzw. Mehrfachnadeln 5' in die Fleischmasse 2 abgegeben bzw. eindosiert.

Mit einer Steuereinheit 7 wird die Hubgeschwindigkeit der Kolbenplatte 4 und des die Nadeln 5, 5' tragenden bzw. antreibenden Nadelhalters 3 eingeregelt bzw. auf gewünschte Werte eingestellt.

Der Antriebskasten bzw. Nadelhalter 3 ist auf Hubstangen 11 gelagert bzw. mit diesen kraftschlüssig verbunden. Die Hubstangen 11 werden über ein Pleuel mit Kurbeltrieb 28 von einem Motor 12 angetrieben, sodass der Antriebskasten 3 bzw. Nadelhalter 3 selbst eine Hubbewegung gemäß Pfeil 29 ausführt. Das Eindosieren der Lake erfolgt derart, dass der Antriebskasten 3 in Richtung auf die Transporteinheit 1 abgesenkt wird, bis ein Fühler 13 einer Abtasteinheit 9 in Anlage an die Oberfläche der Fleischstücke bzw. Fleischmasse 2 kommt. Wird ein derartiger Widerstand mit dem Abtastfühler 13 der Abtasteinheit 9 abgefühlt, so senkt sich der Antriebskasten weiter ab, sodass die Nadeln 5 in die Fleischmasse 2 eindringen, und die Lakeabgabe durch die Nadeln kann beginnen. Nach dem Ende des Eindringhubes erfolgt der Austritthub durch Anheben des Antriebssystems bzw. Nadelträgers 3.

Die Transporteinheit 1, der Antriebskasten bzw. Nadelhalter 3 und die Kolbenplatte 4 befinden sich oberhalb bzw. innerhalb einer Wanne 17, aus der austretende Lake und abgefallene Fleischstücke abgeführt werden, die allenfalls nach einer entsprechenden Aufbereitung wieder der Lakezufuhreinheit 38 zugeführt werden.

Aus Fig. 3 ist ersichtlich, dass die einzelnen Nadeln 5 in Lagern 20 im Nadelhalter 3, insbesondere einzeln für sich, befestigt sind. Der Antrieb 3 ist schematisch dargestellt und vollführt seine Hubbewegungen entsprechend Richtungspfeil 29. Eingebaute pneumatische Hubzylinder 53 mit Hubkolben 52 und Hubstangen 18 treiben die Kolbenplatte 4 zu Hubbewegungen entsprechend Pfeil 19 an, wie aus Fig. 7 ersichtlich.

Aus Fig. 3 ist des weiteren ersichtlich, dass jeder Nadel 5 eine Dosiereinheit 8, insbesondere mit einer Kolbenpumpe 6, zugeordnet ist, die mit Lake von der Lakezufuhreinheit 38 beschickt wird. Über einen Anschluss 39 wird der Lakezufuhreinheit 38 zu verteilende Lake aufgegeben.

Die Abtasteinrichtung 9 mit Abtastfühler 13, mit der die Höhe der Fleischmasse 2 abgefühlt wird bzw. welche die für die einzelnen Hübe zu berücksichtigende Eindringtiefe E festgestellt, ist ebenso wie die Dosiereinheiten 8, der Motor 12, der Antrieb für die Hubstangen 18 und die Lakezufuhreinheit 38 an die Steuereinheit 7 angeschlossen, welche die Funktion der gesamten Vorrichtung bzw. der einzelnen Bauteile steuert.

Es ist vorgesehen, dass die Steuereinheit 7 die Hubgeschwindigkeit des Nadelhalters 3 und der Kolbenplatte 4 in Abhängigkeit von der vorgesehenen bzw. in die Fleischstücke bzw. Fleischmasse 2 einzubringenden Lakemenge derart regelt, dass über die Eindringtiefe bzw. -strecke E bei der Aufwärts- und/oder der Abwärtsbewegung der Nadeln 5 eine vorgegebene Lakemenge pro Volumeneinheit der Fleischmasse 2 gleichmäßig eindosiert wird.

Mit der von der Steuereinheit 7 angesteuerten Dosiereinheit 8 bzw. der Kolbenplatte 4 wird die von den einzelnen Nadeln 5 pro Einspritzhub abzugebende Lake in zeitlich gleichbleibender Menge den Nadeln 5 während der Einspritzhübe zur Abgabe zugeführt.

Die Kolbenplatte 4 und Nadelhalter 3 werden mit wählbaren Geschwindigkeiten angetrieben. Mit der Steuereinheit 7 werden die Geschwindigkeit der Kolbenplatte 4 und die die Lake in die Nadeln 5 drückenden Kolben 40 sowie die Eindring- und Auszugsgeschwindigkeit der Nadeln 5 bzw. 5' in die bzw. aus der Fleischmasse 2 eingeregelt bzw. eingestellt. Die Dosiereinheit 8 versorgt die von der Kolbenplatte 4 betätigten Kolbenpumpen 6 der einzelnen Nadeln 5 bzw. Mehrfachnadeln 5' gesteuert von der Steuereinheit 7 mit Lake. Eine exakte Regelung der zugeführten Lake wird erreicht, wenn jede an die Dosiereinheit 8 angeschlossene Kolbenpumpe 6 von dieser nach jedem Einspritzhub mit einer vorgegebenen, insbesondere für die einzelnen Einspritzhübe gleichen, Lakemenge befüllt wird.

Die Abtasteinheit 9 mit dem Fühler 13 für die Feststellung des Vorhandenseins von Fleischstücken bzw. von Fleischmasse 2 bzw. der Höhe E der Fleischmasse 2 ist unterhalb des Antriebskastens vorgesehen. Mit dieser Abtasteinheit 9 sind die Dosiereinheit 8 und/oder der Antrieb des Nadelhaltes 3 bzw. die Kolbenplatte 4 angesteuert, wozu die Abtasteinheit 9 an die Steuereinheit 7 angeschlossen ist und diese entsprechende Signale abgibt für den Beginn und/oder das Ende der Zufuhr von Lake zu den Nadeln 5, 5' bzw. der Lakeabgabe in die Fleischmasse 2 während der einzelnen Einspritzhübe.

Zur Erhöhung der Betriebssicherheit der erfindungsgemäßen Vorrichtung kann vorgesehen sein, dass eine die Bewegung der Nadeln 5, 5' prüfende Einheit vorgesehen ist, mit der die Kolbenpumpen 6 und/oder der Antrieb des Nadelhalters 3 angesteuert sind, um im Falle des Stillstandes des Nadelhalters 3 bzw. einer Nadel 5 bei Auftreffen auf ein Hindernis, z.B. einen Knochen, ihre Tätigkeit einzustellen.

Die pro Volumenseinheit der Fleischmasse einzudosierende Lakemenge wird vor Beginn der Eindosierung festgelegt. Um die festgelegte Dosis einzubringen, werden die während eines Einspritzhubes pro Zeiteinheit in gleichbleibender Menge abzugebende Lakemenge und die Bewegungsgeschwindigkeit der Nadeln 5 abhängig voneinander festgelegt.

Von Vorteil zur exakten Dosierung ist es, wenn die Lakeabgabe durch die Nadeln 5 und die Zeitdauer des Eindringens der Nadeln in die Fleischmasse 2 gleich lang bemessen sind und vorzugsweise zum gleichen Zeitpunkt beginnen.

Mit der in Fig. 3 schematisch dargestellten Vorrichtung wird Lake dosiert in die neben und/oder übereinander liegenden Lebensmittelprodukte 2 eingebracht, wozu die von den einzelnen Nadeln pro Zeiteinheit abgegebene Lakemenge und die Bewegungsgeschwindigkeit der Nadeln 5 für die jeweiligen Einspritzhübe aufeinander abgestimmt sind. Über die Zeitdauer der einzelnen Einspritzhübe wird die Lake von den einzelnen Nadeln 5 in gleichbleibender bzw. konstanter Menge je Zeiteinheit abgegeben bzw. in die Fleischmasse 2 eingebracht. Wenn die Lakenmenge mit gleichbleibender Menge pro Zeiteinheit von den Nadeln 5 abgegeben wird, hängt die tatsächlich in die Fleischmasse eingebrachte Menge direkt von der Bewegungsgeschwindigkeit der Nadeln 5 ab. Durch Festlegung der Zeitdauer des Eindringens bzw. Heranziehens der Nadeln 5, 5' in die bzw. aus der Fleischmasse 2 wird die längs der Eindringstrecke E eingebrachte Lakemenge eingeregelt, sodass, da von den einzelnen Nadeln 5 einzuspritzende Lakemenge in zeitlich konstanter Menge abgegeben wird. Durch Wahl der Bewegungsgeschwindigkeit der Nadeln 5 kann die tatsächlich eingebrachte Lakemenge festgelegt werden.

Eine exakte Dosierung kann erreicht werden, wenn abhängig von der abgefühlten Höhe E der zu behandelnden Fleischstücke bzw. Fleischmasse 2 die Eindringgeschwindigkeit der Nadeln 5 über diese Höhe konstant gehalten bzw. eine von der abzugebenden Lakemenge abhängige, konstante Eindringgeschwindigkeit berechnet bzw. vorgegeben wird, wobei die Abgabemenge der Lake auf einen zeitlich konstanten Wert eingeregelt wird.

Ein exaktes Eindosieren der Lake mit möglichst wenig überrinnender und zu rezyklierender Lake wird erreicht, wenn mit der Abgabe von Lake begonnen wird, wenn die oder die jeweilige(n) Nadel(n) 5, 5' auf einen abgefühlten bzw. erkannten Widerstand, verursacht durch ein Fleischstück bzw. die Fleischmasse 2, trifft bzw. treffen. Mit der Abgabe der Lake kann auch begonnen werden, wenn die Nadeln 5, 5' eine vorgegebene Stellung im Bezug auf die zu bearbeitende Fleischmasse 2 einnehmen oder wenn die Kolbenplatte 4 von der Abtasteinheit 9 ein von der Fleischhöhe abhängendes Startsignal erhält.

Um exakte Verhältnisse während der einzelnen Hübe zu erhalten, ist es von Vorteil, wenn zwischen dem Ende des Eindringens und dem Beginn des Herausbewegens der Nadeln 5, 5' in die bzw. aus der Fleischmasse 2 für eine vorgegebene Zeitspanne ein Stillstand der Nadeln 5, 5' und/oder eine Unterbrechung der Lakeabgaben bei allen Nadeln erfolgt.

Sobald die Nadeln 5, 5' aus der Fleischmasse 2 herausgetreten sind, erfolgt ein Weitertransport der Fleischmasse 2 mit der Transporteinheit 1. Nachdem der Weitertransport um eine vorgegebene Strecke beendet ist, erfolgt eine neuerliche Eindosierung der Lake während eines Eindringhubes und/oder folgenden Austritthubes.

Fig. 4 zeigt einen Detailschnitt der im vorliegenden Fall Mehrfachnadeln 5' tragenden Antriebseinheit 3 mit der Kolbenplatte 4. Fig. 5 zeigt eine Teilansicht der Fig. 4.

Über eine Anschlussleitung 14 wird von der Lakezufuhreinheit 38 Lake zugeführt und gelangt über ein federbelastetes Rückschlagventil 43 in einen Aufnahmeraum 50. An diesen Aufnahmeraum 50 schließt, insbesondere nach oben zu, ein Dosierraum 41 an, in dem ein Kolben 40 mit Kolbendichtungen 51 auf- und abbewegbar ist. Die Kolbenstange 40 geht von der Kolbenplatte 4 nach unten ab. Mit dem Kolben 40 kann Lake aus dem Aufnahmeraum 50 in den Dosierraum 41 angesaugt werden. Wird der Kolben 40 in seine untere Verdrängerstellung abgesenkt, so verhindert das Rückschlagventil 43 ein Zurückfließen der Lake zur Lakezufuhreinheit 38. Gegen den Schließ-Druck eines Rückschlagventils 44 wird die Lake den Nadeln 5' zugeführt.

Der Kolben 40 ist Teil einer Kolbenpumpe 6, die gesteuert von der Kolbenplatte 4 bzw. der Steuereinheit 7 vorgegebene Hübe vornimmt und dabei eine bestimmte Menge an Lake aufnimmt bzw. abgibt. Diese vorportionierte Lakemenge wird sodann während eines Einspritzhubes durch die Nadeln 5 bzw. 5' eindosiert.

Fig. 2 und Fig. 4 zeigen, dass der Fühler 13 der Abtasteinheit 9 mittels einer Verbindungsstange 37 von der Antriebseinheit 3 getragen sein kann. Entsprechend befindet sich die den Fühler 13 abfüllende Abtasteinheit 9 an der Antriebseinheit 3 und führt mit dieser Hubbewegungen gemäß Pfeil 29 durch.

Fig. 4a zeigt eine Ansicht, vergleichbar mit Fig. 4. Man erkennt die Kolbenplatte 4 in angehobener Stellung. Zwischen dieser angehobenen Stellung und der in Fig. 4 dargestellten abgesenkten Stellung erfolgen die Hubbewegungen, wie mit Pfeil 19 angedeutet. Bei diesen Bewegungen werden die einzelnen Kolben 40, welche von der Kolbenplatte 4 nach unten abgehen, in den Dosierräumen 41 auf- und abbewegt und die in diesen Dosierräumen 41 befindliche Lake in die Nadeln 5, 5' eindosiert. Die Bewegung der Kolbenplatte 4 erfolgt relativ zur Antriebseinheit bzw. dem Nadelträger 3, welche(r) entsprechend Pfeil 29 auf den Hubstangen 11 auf- und abbewegbar gelagert bzw. vom Motor 12 angetrieben ist.

Fig. 6 zeigt eine schematische Ansicht der Antriebseinheit 3 mit abgesenkter Kolbenplatte 4, wobei sich die Kolben 40 in ihrer unteren Stellung befinden. In Fig. 7 ist ein Detail der Antriebseinheit 3 dargestellt. Die Kolbenplatte 4 wird von einer Antriebsstange 18 angetrieben, die ihrerseits von einem pneumatisch angetriebenen, in einem Zylinder bzw. Druckraum 53 verstellbaren Druckkolben 52 in Richtung des Pfeils 19 verstellbar ist. Durch entsprechende Druckbelastung des Kolbens 52 auf seiner einen oder auf seiner anderen Seite erfolgt eine Bewegung des Kolbens 52 nach oben oder nach unten, entsprechend Pfeil 19, und damit eine entsprechenden Verstellung der Kolbenplatte 4, wodurch wiederum die Kolben 40 der Kolbenpumpen 6 zur Eindosierung von Lake verstellt werden.

Im mittleren Bereich der Fig. 6 und 7 sind die vorgesehenen Kolben 40 bzw. Nadeln 5, 5' der Übersichtlichkeit halber weggelassen. Es sind lediglich die seitlich gelegenen Kolben 40 und Nadeln 5' dargestellt.

Anstelle für einen gesamten Einspritzhubes kann die erfindungsgemäße Vorgangsweise auch immer auf einzelne Abschnitte eines Einspritzhubes angewendet werden, für die sodann eine konstante Eindringgeschwindigkeit für die Nadeln mit an die jeweilige Geschwindigkeit angepasster Lakedosierung vorgegeben ist.

Prinzipiell könnte in diesen Abschnitten die vorgegebene konstante Geschwindigkeit unterschiedliche Werte besitzen. Eine entsprechend rasche Beschleunigung und Verzögerung der Nadelgeschwindigkeit, um die konstante Geschwindigkeit zu erreichen, ist dazu Voraussetzung.

## Patentansprüche

1. Verfahren zur Einbringung von Lake in stückige Lebensmittelprodukte, insbesondere in Fleischmasse (2), mit einem Nadeln (5) tragenden, auf und abbewegbaren Nadelhalter (3), von dem Kolbenpumpen (6) getragen sind, deren Kolben (40) von einer Kolbenplatte (4) angetrieben und von Dosiereinheiten (8) mit Lake versorgt sind, welche Kolben (40) die Lake über die Nadeln (5, 5') im Zuge von Einspritzhüben in die unter den Nadeln (5, 5') vorbeibewegten Lebensmittelprodukte (2) einbringen, **dadurch gekennzeichnet, dass** während der jeweiligen Einspritzhübe, gegebenenfalls zumindest über Abschnitte des Einspritzhubes, die Lake in das Lebensmittelprodukt (2) von den einzelnen Nadeln (5) mit einer pro Zeiteinheit konstant gehaltenen Menge abgegeben wird, und dabei die Lake von den einzelnen Nadeln (5) in gleichbleibender Menge je Wegeinheit der Eindring- bzw. Auszugstrecke (E) abgegeben wird, dass zur Einstellung der Menge der pro Einstichhub und pro Volumseinheit des Lebensmittelproduktes (2) einzubringenden Lakemenge die abgebende Lakemenge und die Bewegungsgeschwindigkeit der Nadeln (5, 5') und der Kolben (40) für die einzelnen Einspritzhübe bzw. deren Abschnitte eingeregelt bzw. vorgegeben wird und dass die Nadeln (5) während eines Einspritzhubes bzw. während der einzelnen Abschnitte desselben mit konstanter Geschwindigkeit bewegt werden, wobei für jeden Einspritzhub jeder einzelnen Nadel (5) eine vorgegebene, volumsportionierte Lakemenge zugeführt und/oder von jeder einzelnen Nadel (5) während eines Einspritzhubes bzw. Abschnittes davon eine gleich große, volumsportioniert vorgegebene Lakemenge in zeitlich konstanter Menge abgegeben wird, oder wobei eine vorgegebene Anzahl von Nadeln als Mehrfachnadel (5') ausgebildet ist, die jeweils eine Anzahl von Nadeln (5), insbesondere zwei, drei oder vier Nadeln, umfasst, die von derselben Kolbenpumpe (6) versorgt sind, wobei in eine Mehrfachnadel (5) für einen Einspritzhub dieselbe Lakenmenge wie in die übrigen einzelnen Nadeln zur Abgabe eindosiert und diese Lakemenge von der Mehrfachnadel (5') in konstanter Menge pro Zeiteinheit abgegeben wird.

2. Verfahren nach Anspruch 1, **dadurch gekennzeichnet, dass** jeder Nadel (5) und jeder Mehrfachnadel (5') eine gleich große Flächeneinheit auf der Kolbenplatte (4) und/oder auf den zu bearbeitenden Lebensmittelprodukten (2) zugeordnet wird und allen einzelnen Nadeln (5) und/oder einzelnen Mehrfachnadeln (5') die selbe bzw. eine gleich große für diese Flächeneinheit bemessene Lakemenge für das Einbringen in die jeweiligen unterhalb dieser Flächeneinheit befindlichen Volumina des Lebensmittelprodukts (2) von der Dosiereinheit (8) zugeführt wird.

3. Verfahren nach Anspruch 1 oder 2, **dadurch gekennzeichnet, dass** mit der Abgabe von Lake begonnen wird, wenn die Nadeln (5, 5') auf einen abgefühlten oder erkannten Widerstand, hervorgerufen von einem Stück des Lebensmittelproduktes (2) treffen oder, dass mit der Abgabe der Lake begonnen wird, wenn die Nadeln (5, 5') eine vorgegebene Stellung im Bezug auf das zu bearbeitende Lebensmittelprodukt (2) einnehmen oder dass mit der Abgabe der Lake begonnen wird, wenn von einer Abtasteinheit (9) für das Lebensmittelprodukt (2) abhängig von der der Eindringstrecke (E) entsprechenden Höhe des Produktes das Aufsetzen der Nadeln (5, 5') auf das Produkt (2) festgestellt wird und /oder dass bei Feststellung eines Widerstandes gegen ein Eindringen einer Nadel (5, 5'), der einen vorgegebenen Wert überschreitet, oder bei Auftreffen der Nadel (5, 5') auf einen in einer Fleischmasse (2) enthaltenen Knochen, das Eindringen zumindest für diese Nadel (5) und/oder eine Abgabe von Lake durch diese Nadel (5) für diesen Eindringhub abgebrochen wird.

4. Verfahren nach einem der Ansprüche 1 bis 3, **dadurch gekennzeichnet, dass** ein Einspritzhub entweder nur das Eindringen oder das Eindringen und das Herausziehen oder nur das Herausziehen der Nadeln (5) jeweils über eine vorgegebene Eindringtiefe (E) umfasst, die einem Teil oder der gesamten Höhe des Lebensmittelproduktes (2) entspricht und/oder dass zwischen dem Ende des Eindringens und dem Beginn des Herausbewegens der Nadeln (5) in das und aus dem Produkt (2) für eine vorgegebene Zeitspanne ein Stillstand der Nadeln (5) und/oder eine Unterbrechung der Lakeabgaben durch die Nadeln (5) erfolgt und/oder dass die Lakeabgabe durch die Nadeln (5, 5') und die Zeitdauer des Eindringens der Nadeln (5, 5') in das Produkt (2) und/oder auch die Zeitdauer für das Herausziehen gleich lang bemessen sind und gegebenenfalls zum gleichen Zeitpunkt beginnen.

5. Verfahren nach einem der Ansprüche 1 bis 4, **dadurch gekennzeichnet, dass** den Nadeln (5, 5') die zu dosierende Lakemenge mit von Antrieben, insbesondere Linearantrieben mit konstanter Geschwindigkeit, angetriebenen Kolbenpumpen (6) aufgegeben wird und/oder dass die Kolbenplatte (4) mit einem Antrieb, einem Linearantrieb, einem Hydraulikantrieb oder einem Luftzylinderantrieb mit einer einstellbaren, während eines Einspritzhubes konstant bleibenden Geschwindigkeit bewegt wird.

6. Vorrichtung zur Einbringung von Lake in Lebensmittelprodukte (2), insbesondere in Fleischmasse, mit Nadeln (5, 5') die von einem Nadelhalter (3) getragen sind, welche Nadeln (5, 5') mit Kolbenpumpen (6), deren Kolben (40) von einer gesteuert verstellbaren Kolbenplatte (4) getragen sind, mit Lake versorgt sind, die von Dosiereinheiten (8) zugeführt ist, wobei die Nadeln (5, 5') im Zuge ihrer Einspritzhübe Lake in die Lebensmittelprodukte (2) einbringen, insbesondere zur Durchführung des Verfahrens nach einem der Ansprüche 1 bis 5, **dadurch gekennzeichnet, dass** eine Steuereinheit (7) vorgesehen ist, mit der die Kolbenplatte (4) gesteuert ist; sodass den Nadeln (5, 5') für die einzelnen Einspritzhübe oder zumindest für einzelne Abschnitte davon Lake dosiert zuführbar ist, welche Lake von den Nadeln (5, 5') in einer je Zeiteinheit konstanten Menge abgegeben wird und mit der die abzugebende bzw. den Nadeln (5, 5') zugeführte Lakemenge und die Bewegungs- bzw. Hubgeschwindigkeit des Nadelhalters (3) für die jeweiligen Einspritzhübe oder einzelne Abschnitte derselben auf eine vorgegebene, während der Einspritzhübe oder der einzelnen Abschnitte konstant gehaltene Geschwindigkeit eingeregelt ist, wobei die Steuereinheit (7) die Hubgeschwindigkeit in Abhängigkeit von der vorgegebenen, in die Lebensmittelprodukte (2) einzubringenden Lakemenge derart regelt, dass die Nadeln (5) über die Eindringtiefe bzw. -strecke (E) oder die einzelnen Abschnitte derselben bei der Aufwärts- und/oder der Abwärtsbewegung eine vorgegebene Lakemenge pro Wegeinheit in das Produkt (2) abgeben und dass die von der Steuereinheit (7) angesteuerte Dosiereinheit (8) den Nadeln (5, 5') die pro Einspritzhub oder pro einzelnem Abschnitt abzugebene Lake in volumsportionierter Menge zur Abgabe zuführt, wobei jede einzelne Nadel (5) mit einer von der Steuereinheit (7) betätigbaren Kolbenpumpe (6) mit Lake versorgt ist und/oder jede an die Dosiereinheit (8) angeschlossene Kolbenpumpe (6) von der Dosiereinheit (8) nach jedem Einspritzhub oder nach einer vorgegebenen Anzahl von Einspritzhüben mit einer vorgegebenen, für eine vorgegebene Anzahl von aufeinanderfolgenden Einspritzhüben gleichbleibenden, Lakemenge befüllbar ist, oder eine vorgegebene Anzahl von Nadeln (5) als Mehrfachnadel (5') ausgebildet ist, wobei jede dieser Mehrfachnadeln (5') eine Mehrzahl von Nadeln (5), insbesondere zwei, drei oder vier Nadeln (5), umfasst, die alle an dieselbe Kolbenpumpe (6) angeschlossen sind, wobei in die von der Mehrfachnadel (5') umfassten Nadeln (5) für einen Einspritzhub dieselbe Lakenmenge wie in einzelne Nadeln (5) zur Abgabe eindosiert und diese Lakenmenge aufgeteilt auf die Nadeln der Mehrfachnadel (5') in konstanter Menge pro Zeiteinheit abgegeben wird.

7. Vorrichtung nach Anspruch 6, **dadurch gekennzeichnet, dass** eine Abtasteinheit (9, 13) für die Feststellung des Vorhandenseins eines Produktes (2) unterhalb des Nadelhalters (3) und/oder zur Feststellung der Höhe (E) der Produkte (2) vorgesehen ist, und dass mit dieser Abtasteinheit (9, 13) die Dosiereinheit (8) und/oder der Antrieb des Nadelhalters (3) und/oder der Kolbenplatte (4) angesteuert sind, wozu die Abtasteinheit (9, 13) an die Steuereinheit (7) angeschlossen ist und ein Freigabesignal abgibt für den Beginn und/oder das Ende der Zufuhr von Lake zu den Nadeln (5) und/oder der Lakeabgabe in die Produkte und/oder dass eine die Lage und/oder Bewegung der Nadeln (5, 5') überwachende Einheit vorgesehen ist, mit der die Dosiereinheit (8) und/oder die Kolbenpumpen (6) und/oder die Kolbenplatte (4) und/oder der Nadelträger (3) angesteuert sind und dass die Steuereinheit (7) bei Auftreffen von Nadeln auf ein Hindernis oder einen Knochen die Tätigkeit dieser Einheiten still setzt.

8. Vorrichtung nach Ansprüche 6 oder 7, **dadurch gekennzeichnet, dass** jede Kolbenpumpe (6) einen Linearantrieb zur Abgabe einer konstanten Lakemenge pro Zeiteinheit besitzt und/oder dass jede Nadel (5, 5') an eine eigene Kolbenpumpe (6) angeschlossen oder von einer eigenen Kolbenpumpe (6) versorgt ist.

9. Vorrichtung nach einem der Ansprüche 6 bis 8, **dadurch gekennzeichnet, dass** die Nadeln (5) und die Mehrfachnadeln (5') in gleichen gegenseitigen Abständen auf dem Nadelträger (3) angeordnet sind.

10. Vorrichtung nach einem der Ansprüche 6 bis 9, **dadurch gekennzeichnet, dass** jeder Nadel (5) und jeder Mehrfachnadel (5') eine gleich große Flächeneinheit auf dem Nadelhalter (3) und/oder in Bezug auf das zu bearbeitende Produkt (2) und/oder in Bezug auf die Ebene der Transporteinrichtung (1) zugeordnet ist und allen Nadeln und/oder Mehrfachnadeln dieselbe für diese Flächeneinheit bemessene Lakemenge für das Einbringen in die jeweiligen innerhalb und unterhalb bzw. innerhalb dieser Flächeneinheit befindlichen Volumina des Produktes (2) von der Dosiereinheit (8) über die jeweilige Kolbenpumpe (6) zugeführt ist.

## Claims

1. A method for introducing brine into chunky food products, especially into a meat mass (2), using a needle holder (3) bearing needles (5), which can be moved upwards and downwards and supports piston pumps (6), the pistons (40) of said piston pumps (6) being driven by a piston plate (4) and being supplied with brine by dosing units (8), said pistons (40) introducing the brine (5, 5') into food products (2), which are moved along beneath said needles (5, 5'), by means of said needles in the course of injecting strokes, **characterized in that**, in the course of the individual injecting strokes, optionally at least in the course of sections of the injection strokes, the brine is introduced into the food product (2) by means of the individual needles (5) at an amount per time unit which remains constant and **in that** the brine is dispensed by the individual needles (5) at a constant rate per unit of the penetration and extraction path (E), **in that** the amount of brine to be dispensed and the rate of movement of the needles (5, 5') and the pistons (40) is set or determined for the individual injecting strokes or sections thereof in order to determine the amount of brine to be introduced per injecting stroke and per volumetric unit of the food product (2) and **in that** the needles (5) are moved at a constant velocity in the course of one injecting stroke or in the course of the individual sections of said injecting stroke, a predetermined amount of brine in volumetric portions being supplied to each of the needles (5) for each injecting stroke and/or a constant, predetermined volumetric portion of brine being dispensed by each needle (5) in the course of the injecting stroke or a section thereof at an amount which remains constant over time, or a predetermined number of needles being provided in the form of a multiple needle device (5') comprising a specific number of needles (5), particularly two, three, or four needles, to which brine is supplied by a single piston pump (6), the amount of brine being introduced into one multiple needle device (5') for one injecting stroke corresponding to the amount of brine introduced into each of the other individual needles in order to be dispensed, this amount of brine being dispensed by the multiple needle device (5') at a constant rate per time unit.

2. The method according to claim 1, **characterized in that** the area units of the piston plate (4) and/or of the food products (2) to be processed which are assigned to each needle (5) and each multiple needle device (5') are of the same size and **in that** the same amount of brine or amounts of brine of the same size, which is/are adapted to this area unit and is/are to be introduced into the volumes of the food product (2) disposed beneath this area unit, is/are supplied to each of the individual needles (5) and/or of the individual multiple-needle devices (5') by means of the dosing unit (8).

3. The method according to claim 1 or claim 2, **characterized in that** the brine is started to be dispensed when the needles (5, 5') meet a sensed, or detected, resistance of a chunk of the food product (2) or **in that** the brine is started to be dispensed when the needles (5, 5') have reached a predetermined position in relation to the food product (2) to be processed or **in that** the brine is started to be dispensed when a sensing unit (9) registers that the needles (5, 5') have been placed on the product (2), if the height of the product corresponds to the length of the penetration path (E), and/or **in that**, when a resistance against the penetration of a needle (5, 5') exceeding a predetermined value is met or when the needle (5, 5') meets a bone contained in a meat mass (2), the respective needle (5) is stopped from penetrating any further and/or is stopped from dispensing brine in the course of this very penetrating stroke.

4. The method according to any one of the claims 1 to 3, **characterized in that** an injecting hub either only comprises the penetration of the needles (5) or the penetration and the extraction of the needles (5) or only the extraction of the needles (5) across a predetermined penetrating depth (E), which corresponds to the entire height of the food product (2) or a section thereof, and/or **in that** the needles (5) stand still and/or stop dispensing brine for a certain period of time between the completion of the penetration into and the beginning of the extraction movement of the needles (5) out of the product (2) and/or **in that** the periods of time during which the needles (5, 5') dispense brine, penetrate into the food product (2), and/or are extracted from the food product are of equal duration and, optionally, start at the same point in time.

5. The method according to any one of the claims 1 to 4, **characterized in that** the amount of brine to be dosed into the food product (2) is supplied to the needles (5, 5') by piston pumps (6) which are driven by drives, particularly by linear actuators at a constant velocity, and/or **in that** the piston plate (4) is moved by a drive, a linear actuator, a hydraulic actuator, or a pneumatic cylinder actuator at a velocity which can be adjusted and remains constant in the course of an injecting stroke.

6. An apparatus for introducing brine into food products (2), especially into a meat mass, using needles (5, 5') supported by a needle holder (3), said needles (5, 5') being supplied with brine by piston pumps (6), the pistons (40) of said pumps being supported by a piston plate (4) which may be adjusted in a controlled way, said needles (5, 5') introducing brine into the food product (2) in the course of their injecting strokes, especially for implementing the method according to any one of the claims 1 to 5, **characterized in that** brine can be supplied to the needles (5, 5') in a dosed amount for the individual injecting strokes or at least sections thereof, said brine being dispensed by the needles (5, 5') at a constant amount per time unit and the amount of brine to be dispensed or supplied to the needles (5, 5') being adjusted to a predetermined velocity, the control unit (7) controls the hoisting velocity depending on the predetermined amount of brine which is to be introduced into the food products (2), so that, along the length of the penetration depth or path (E) or along the individual sections thereof, the needles (5) dispense a predetermined amount of brine per path unit into the product (2) and that the dosing unit (8) controlled by the control unit (7) supplies the needles (5, 5') with volumetric portions of brine to be dispensed per injecting stroke or per individual section thereof, each individual needle (5) being supplied with brine by a piston pump (6) driven by the control unit (7) and/or each piston pump (6) connected to the dosing unit (8) being filled with a predetermined amount of brine, which remains constant for a predetermined number of subsequent injecting strokes, by the dosing unit (8) after each injecting stroke or after a predetermined number of injecting strokes, or a predetermined number of needles being provided in the form of a multiple needle device (5') comprising a specific number of needles (5), particularly two, three, or four needles, which are all connected to a single piston pump (6), the amount of brine being introduced into the needles (5) constituting said multiple needle device (5') for one injecting stroke corresponding to the amount of brine which is introduced into individual needles in order to be dispensed, this amount of brine being distributed to the individual needles of the multiple needle device (5') and being dispensed at a constant rate per time unit.

7. The apparatus according to claim 6, **characterized in that** a sensing unit (9, 13) for determining the presence of a product (2) and/or for determining the height (E) of the products (2) is provided beneath the needle holder (3) and **in that** said sensing unit (9, 13) controls the dosing unit (8) and/or the drive of the needle holder (3) and/or of the piston plate (4), the sensing unit (9, 13) being connected to the control unit (7) and generating an enabling signal in order to start and/or to stop the supply of brine to the needles (5) and/or the brine from being dispensed into the products, and/or **in that** a unit for monitoring the position and/or the movement of the needles (5, 5') is provided, said unit driving the dosing unit (8) and/or the piston pumps (6) and/or the piston plate (4) and/or the needle holder (3), and **in that**, when needles meet an obstacle or a bone, the control unit (7) stops the activity of the respective units.

8. The apparatus according to claim 6 or claim 7, **characterized in that** each piston pump (6) has a linear actuator for dispensing a constant amount of brine per time unit and/or **in that** each needle (5, 5') is connected to its own piston pump (6) or is supplied with brine by its own piston pump (6).

9. The apparatus according to any one of the claims 6 to 8, **characterized in that** the needles (5) and the multiple needle devices (5') are disposed on the needle holder (3) at mutually equal distances.

10. The apparatus according to any one of the claims 6 to 9, **characterized in that** to each needle (5) and each multiple needle device (5') an area unit on the needle holder (3) and/or in relation to the product (2) to be processed and/or in relation to the level of the transport device (1) is assigned, said area units being of the same size, and **in that** all needles and/or all multiple needle devices are supplied with the same amount of brine, adapted to the respective area unit, by the dosing unit (8) via the respective piston pump (6) in order to dispense the brine into the volumes of the product (2) disposed within and under or within the respective area unit.

## Revendications

1. Procédure pour l'introduction de saumure dans des produits alimentaires (2), notamment dans une masse de viande, en utilisant un porte-aiguilles (3) montant et descendant qui supporte des aiguilles (5) et des pompes à piston (6), les pistons (40) desdites pompes étant actionnés par une plaque de piston (4) et étant approvisionnés en saumure par des unités de dosage (8), lesdits pistons (40), au cours de courses d'injection, introduisant la saumure via les aiguilles (5, 5') dans des produits alimentaires (2) qui sont passés sous les aiguilles (5, 5'), **caractérisée en ce que**, au cours des courses d'injection, éventuellement au moins au cours de certaines sections de la course d'injection, la saumure est dispensée dans le produit alimentaire (2) par les aiguilles (5) individuelles à une quantité constante par unité de temps et **en ce que** la saumure est dispensée par les aiguilles (5) individuelles à une quantité constante par unité de la distance de pénétration et d'extraction (E), **en ce que**, pour ajuster la quantité de saumure à introduire par course d'injection et par unité volumétrique du produit alimentaire (2), la quantité de saumure à dispenser et la vitesse de mouvement des aiguilles (5, 5') et des pistons (40) pour les courses d'injection individuels ou pour leurs sections sont ajustées ou prédéterminées, et **en ce que** les aiguilles (5) sont déplacées à une vitesse constante pendant un course d'injection ou au cours des sections individuelles dudit course, chaque aiguille (5) individuelle étant approvisionnée en une quantité prédéterminée en une portion volumétrique pour chaque course d'injection et/ou chacune des aiguilles (5) dispensant une portion volumétrique équivalente de saumure en quantités constants par unité de temps pendant un course d'injection ou une section dudit course, ou un nombre prédéterminé d'aiguilles (5) formant un dispositif à multiples aiguilles (5') comprenant un nombre d'aiguilles, notamment deux, trois au quatre aiguilles (5), qui sont approvisionnées par une même pompe à piston (6), la quantité de saumure introduite dans un dispositif à multiples aiguilles (5') correspondant à celle qui est introduite dans les autres aiguilles (5) individuelles pour en être dispensée et ladite quantité de saumure étant dispensée par le dispositif à multiples aiguilles (5') à un taux constant par unité de temps.

2. Procédure selon la revendication 1, **caractérisée en ce qu'**une unité de surface de la plaque de piston (4) et/ou des produits alimentaires (2) à traiter est attribuée à chaque aiguille (5) et chaque dispositif à multiples aiguilles (5'), lesdites unités de surface étant équivalentes en dimension, et **en ce que** les quantités de saumure pour être introduite dans les volumes du produit alimentaire (2) sous cette unité de surface par l'unité de dosage (8) dont les aiguilles (5) individuelles et/ou les dispositifs individuels à multiples aiguilles (5') sont approvisionnés sont équivalentes ou équivalentes et calculées pour l'unité de surface respective.

3. Procédure selon la revendication 1 ou 2, **caractérisée en ce que** la distribution de saumure commence quand les aiguilles (5, 5') touchent à une résistance explorée en forme d'une pièce du produit alimentaire (2) ou **en ce que** la distribution de saumure commence quand les aiguilles (5, 5') ont atteint une position prédéterminée relative au produit alimentaire (2) à traiter ou **en ce que** la distribution de saumure commence quand une unité d'exploration (9) constate que les aiguilles (5, 5') ont été posées sur le produit (2), en fonction de la hauteur du produit qui correspond à la distance de pénétration (E), et/ou **en ce que**, quand une résistance contre la pénétration d'une aiguille (5, 5') excédant une valeur prédéterminée est constatée ou quand l'aiguille (5, 5') touche à un os contenu dans la masse de viande (2), la pénétration au moins de l'aiguille respective (5) et/ou la distribution de saumure via ladite aiguille (5) est arrêtée pour la course de pénétration respective.

4. Procédure selon l'une des revendications 1 à 3, **caractérisée en ce que** une course d'injection comprend seulement la pénétration ou la pénétration et l'extraction ou seulement l'extraction des aiguilles (5), respectivement à travers une profondeur de pénétration (E) prédéterminée qui correspond à la hauteur entière du produit alimentaire (2) ou à une partie de cette hauteur, et/ou **en ce que**, après l'achèvement de la pénétration dans le et avant l'extraction des aiguilles (5) du produit alimentaire (2), les aiguilles (5) et/ou la distribution de saumure à travers les aiguilles (5) sont arrêtées et/ou **en ce que** la distribution à travers les aiguilles (5, 5') et la pénétration des aiguilles (5, 5') dans le produit (2) et/ou l'extraction sont de la même durée et éventuellement commencent en même temps.

5. Procédure selon l'une des revendications 1 à 4, **caractérisée en ce que** la quantité de saumure à doser est introduite dans les aiguilles (5, 5') par des pompes à piston (6) actionnées par des entraînements, notamment par des entraînements linéaires à vitesse constante, et/ou **en ce que** la plaque de piston (4) est déplacée par un entrainement, un entraînement linéaire, un entraînement hydraulique ou un entraînement pneumatique à une vitesse ajustable qui est constante pendant une course d'injection.

6. Appareil pour introduire de la saumure dans des produits alimentaires (2), notamment dans une masse de viande, en utilisant des aiguilles (5, 5') supportées par un porte-aiguilles (3), lesdits aiguilles (5, 5') étant approvisionnées en saumure par des pompes à piston (6), les pistons (40) desquelles sont supportés par une plaque de piston (4) qui peut être ajustée de manière contrôlée, les aiguilles (5, 5') introduisant de la saumure dans les produits alimentaires (2) au cours de leurs courses d'injection, notamment pour réaliser une procédure selon l'une des revendications 1 à 5, **caractérisé en ce qu'**une unité de commande (7) pour contrôler la plaque de piston (4) est prévue pour approvisionner les aiguilles (5) en saumure de manière dosée pour chaque course d'injection individuelle ou au moins pour des sections individuelles des courses, ladite saumure étant dispensée par les aiguilles (5, 5') en une quantité constante par unité de temps et régulant la quantité de saumure à dispenser ou introduite dans les aiguilles (5, 5') et la vitesse de déplacement et de levage du porte-aiguilles (3) pour les courses d'injections individuelles ou des sections individuelles des courses pour être constante, l'unité de commande (7) ajustant la vitesse de levage en fonction de la quantité de saumure prédéterminée à être introduite dans les produits alimentaires (2) pour que les aiguilles (5), au cours de leurs mouvements montants et descendants, dispensent une quantité prédéterminée de saumure par unité de la distance ou profondeur de pénétration (E) ou des sections individuelles de celle-ci et pour que l'unité de dosage (8) actionnée par l'unité de commande (7) approvisionne les aiguilles (5, 5') en une portion volumétrique de saumure à être dispensée par course d'injection ou par section individuelle, chaque aiguille individuelle (5) étant approvisionnée en saumure par une pompe à piston (6) reliée à l'unité de dosage (8) et/ou chaque pompe à piston (6) reliée à l'unité de dosage (8) peut être remplie avec une quantité de saumure prédéterminée qui reste constante pour un nombre prédéterminé de courses d'injection successives ou un nombre prédéterminée d'aiguilles (5) formant un dispositif à multiples aiguilles (5'), ledit dispositif à multiples aiguilles (5') comprenant une pluralité d'aiguilles (5), notamment deux, trois ou quatre aiguilles (5), qui sont toutes reliées à la même pompe à piston (6), la quantité de saumure introduite dans les aiguilles (5) constituant un dispositif à multiples aiguilles (5') pour une course d'injection correspondant à celle qui est introduite dans les aiguilles (5) individuelles pour en être dispensée, ladite quantité de saumure étant distribuée aux aiguilles constituant le dispositif à multiples aiguilles (5') pour en être dispensée à un taux constant par unité de temps.

7. Dispositif selon la revendication 6, **caractérisé en ce qu'**une unité d'exploration (9, 13) est prévue pour déterminer la présence d'un produit (2) sous le porte-aiguilles (3) et/ou pour déterminer la hauteur (E) des produits et **en ce que** cette unité d'exploration (9, 13) commande l'unité de dosage (8) et/ou l'entraînement du porte-aiguilles (3) et/ou de la plaque de piston (4), l'unité d'exploration (9, 13), pour ce faire, étant reliée à l'unité de commande (7) et générant un signal de validation pour déclencher et/ou arrêter l'approvisionnement des aiguilles (5) en saumure et/ou la distribution de saumure dans les produits et/ou **en ce que** une unité est prévue pour surveiller la position et/ou le déplacement des aiguilles (5, 5'), ladite unité commandant l'unité de dosage (3) et/ou les pompes à piston (6) et/ou la plaque de piston (4) et/ou le porte-aiguilles (3) et **en ce que** l'unité de commande (7) arrête l'activité de ces unités quand des aiguilles touchent à un obstacle ou un os.

8. Dispositif selon la revendication 6 ou 7, **caractérisé en ce que** chaque pompe à piston (6) a son propre entraînement linéaire pour la distribution d'une quantité constante de saumure par unité de temps et/ou **en ce que** chaque aiguille (5, 5') est reliée à sa propre pompe à piston (6) ou est approvisionnée par sa propre pompe à piston (6).

9. Dispositif selon l'une des revendications 6 à 8, **caractérisé en ce que** les aiguilles (5) et les dispositifs à multiples aiguilles (5') sont disposées sur le porte-aiguilles (3) à des distances équivalentes l'une de l'autre.

10. Dispositif selon l'une des revendications 6 à 9, **caractérisé en ce qu'**une unité de surface de la plaque de piston (4) et/ou du produit alimentaire (2) à traiter et/ou du niveau de l'installation de transport (1) est attribuée à chaque aiguille (5) et chaque dispositif à multiples aiguilles (5'), lesdites unités de surface étant équivalentes en dimension, et **en ce que** les quantités de saumure pour être introduite dans les volumes du produit alimentaire (2) sous cette unité de surface par l'unité de dosage (8), dont toutes les aiguilles et/ou tous les dispositifs à multiples aiguilles sont approvisionnés, sont équivalentes et calculées pour l'unité de surface respective.
